(19) Europäisches Patentamt

European Patent Office

Office européen des brevets

(11) **EP 1 039 706 A1**

(12) **EUROPEAN PATENT APPLICATION**

(43) Date of publication:
**27.09.2000 Bulletin 2000/39**

(51) Int. Cl.$^7$: **H04L 27/22, H04L 25/03**

(21) Application number: **00301398.4**

(22) Date of filing: **22.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.03.1999 US 259949**

(71) Applicant:
**LUCENT TECHNOLOGIES INC.
Murray Hill, New Jersey 07974-0636 (US)**

(72) Inventor: **Tonello, Andrea M.
Bridgewater, New Jersey 08807 (US)**

(74) Representative:
**Watts, Christopher Malcolm Kelway, Dr. et al
Lucent Technologies (UK) Ltd,
5 Mornington Road
Woodford Green Essex, IG8 0TU (GB)**

(54) **Iterative differential detector**

(57) The present invention provides a device and method for a receiver that iteratively detects and decodes differentially modulated symbols at a relatively lower error rate. The method and device of the present invention calculates extrinsic and a priori information and uses such information to more accurately detect and decode information carried by the symbols. First, a block of samples representing at least one symbol is received. Reliability information (or soft outputs) is calculated from the received at least one block of samples and any available a priori information. Extrinsic information and updated a priori information are obtained from the calculated reliability information and such a priori information and extrinsic information are iteratively used to recalculate the reliability information. The iteratively calculated reliability information is ultimately used to decode information carried by the at least one block of samples.

FIG. 4
300

EP 1 039 706 A1

**Description**

**Background of the Invention**

**Field of the Invention**

The present invention provides a method and device for detecting differentially encoded signals and more particularly a method for detecting a certain category of differentially encoded signals such as M-DPSK signals.

**Description of the Related Art**

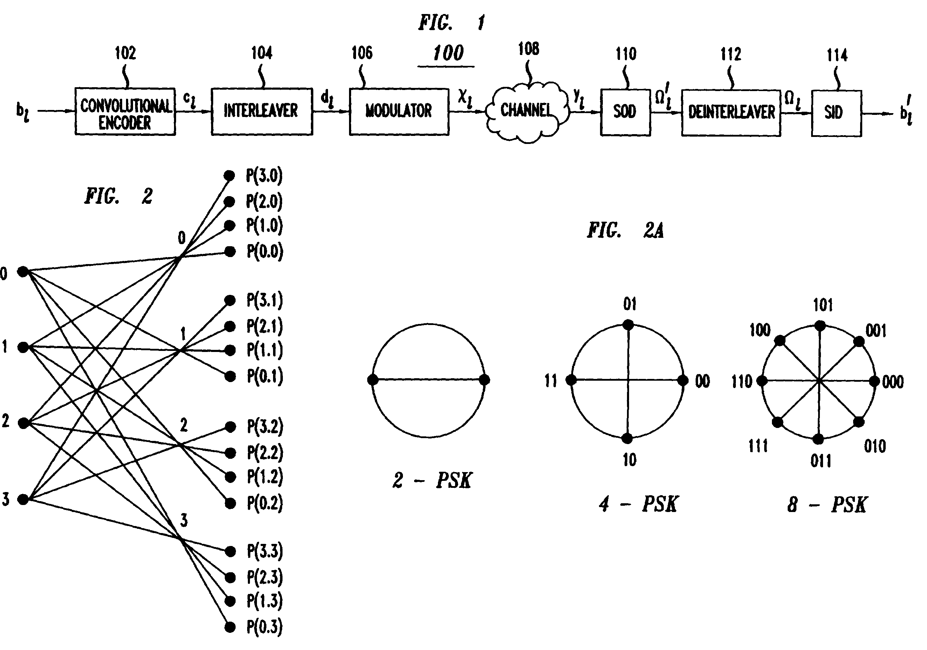

Digital telecommunication systems convey digital information (i.e., bits or groups of bits) over various types of communication channels such as air, coaxial cables, telephone lines, fiber optic lines or any other well known medium through which communication signals propagate. The digital information is transmitted and received with the use of well known standard transmitter and receiver equipment. FIG. 1 depicts a model of a typical digital communication system comprising a transmitter connected to a receiver via a communication channel. The transmitter comprises convolutional encoder 102 coupled to Interleaver 104 which is coupled to modulator 106. The input signal $b_i$ is typically a string or group of bits arranged in any well known format. The digital bits are representative of any type of signals (digital or analog) originating from any well known communication equipment. For example, the input signal can represent digitized voice, digitized video signal or digital signals from a personal computer (PC) or computer system. Although not shown, it should be understood that the transmitter also comprises circuitry (e.g., Analog to Digital Converter, A/D convener) that converts analog signals to bits. Further, the transmitter comprises well known radio or other transmission circuitry configured to transmit digitally modulated signals which appear at the output of modulator 106.

Modulator 106 is designed to digitally modulate signals with the use of well known spectrally efficient modulation techniques such as Differential Phase Shift Keying (DPSK). Generally, modulator 106 is an M-DPSK modulator where M represents the total number of different groupings of bits that can be transmitted by a digital modulator at a given time. For example for M=8, each grouping of bits contains N bits where $N = \log_2 M$. Thus, for M=8, N is equal to 3. The output of modulator 106 (i.e., symbols $x_i$) is then transmitted through channel 108 with the use of the aforementioned radio transmission circuitry. The incoming bits to modulator 106 are the output of interleaver 104 whose input signal is $c_i$. The signal $c_i$ is a stream of bits, each of which is commonly referred to as a codeword, appearing at the output of convolutional encoder 102.

Convolutional encoder 102 is a well known bit processing device and/or function which, in essence, adds bits to the incoming bit stream $b_i$ to introduce redundancy in the incoming bits stream thus allowing for error correction at the receiver. The convolutionally encoded bits are represented by bit stream $c_i$ which is interleaved by interleaver 104. Interleaver 104 is also a well known bit processing device and/or function that alters the time order of the bits represented by $c_i$ thus introducing time diversity in a bit stream without adding bits to the bit stream. Although convolutional encoder 102, interleaver 104 and modulator 106 are described and depicted as separate devices, they can also be different parts of a signal processing and/or computer based system.

The receiver of the communication system model comprises a device hereinafter be referred to as Soft Output Detector (SOD) 110. The receiver further comprises Deinterleaver 112 and another device hereinafter referred to as Soft Input Decoder (SID) 114. SOD 110 is coupled to Deinterleaver 112 which is coupled to SID 114. It will be readily understood that the receiver typically comprises a plurality of receiving devices each of which is configured to receive a separate signal. For example the receiver shown in FIG. 1 comprises $N_a$ receiving devices (not shown) where $N_a$ is an integer equal to or greater than 1. In the case where the receiving device is an array of $N_a$ antennae, the communication system modeled in FIG. 1 may be, for example, a mobile communication system (i.e., a wireless communication system). In a mobile (wireless) communication system (and other communication systems) each antenna receives signals located in a certain frequency band. The received signal is downconverted (i.e., frequency content of the signal is changed to lower frequencies) and applied to a matched filter. The filtered signal is sampled at a rate greater than or equal to 1/T where T is a period of time that represents a signaling interval (i.e., the amount of time it takes to transmit a particular signal). The samples (i.e., sampled received signals, $y_i$) are fed to SOD 110. Further, well known receiver circuitry (e.g., amplifiers, filters), which are not shown, are also used to receive the plurality of different signals conveyed over channel 108. For the sake of simplicity and ease of illustration, the $N_a$ antennae and associated receiver circuitry are not shown. It will be readily understood that the receiver may be implemented with any well known receiving devices (other than antennae) that allow it to receive a plurality of separate signals. However, the receiving devices are hereinafter referred to as antennae simply for ease of discussion only. SOD 110 is a device that generates reliability information ($\Omega_i^{'}$) from the samples $y_i$.

The reliability information (or soft outputs) generated by SOD 110 represents a probability that the received signal is a particular grouping of bits from a set of bit groups defined by modulator 106 or the probability of each single bit within each transmitted symbol. It is important to note that the reliability information does not represent the actual transmitted signal but it provides an indication of the most likely signal that was transmitted. The output of SOD 110 (i.e., $\Omega_i^{'}$) is applied to Deinterleaver 112. Deinterleaver 112 performs the inverse operation of Interleaver 104 in that the signals $\Omega_i^{'}$ are rearranged in their proper time order. The output of Deinterleaver 112 ($\Omega_i$) is applied to Soft Input Decoder 114 (SID). SID 114 performs a decoding operation that serves to decode the output of Deinterleaver 112 into a stream of bits represented by $b_i^{'}$. Assuming the transmitter has a convolutional encoder, one example of a corresponding decoding operation is the Soft Input Viterbi Decoder which applies the well known Viterbi Decoding algorithm; G. D. Forney, "*The Viterbi Algorithm*," Proc. IEEE, March 1973, pp. 268-278.

Samples $y_i$ represent the transmitted symbols $x_i$ after they have propagated through channel 108. Channel 108 has well known characteristics (e.g., amplitude response, phase response, impulse response) that alter the transmitted symbols. As is well known in communication theory, the channel is a source of distortions, viz., multiplicative distortion, (e.g., phase jitter, amplitude degradation, frequency translation) that directly affect the transmitted symbols; such distortions are typically characterized mathematically using statistical and probability models. Furthermore, at the receiver noise components are added to the signal. Noise components are typically added by receiver circuitry and other circuitry. One example of noise is Additive White Gaussian Noise (AWGN). The channel characteristics and noise represent the effects of the channel on the transmitted sequence of symbols $x_i$. The noise signals are represented by $n$. The multiplicative distortions from the channel are represented by $h$. The aggregate effect of the channel on the transmitted symbols ($x_i$) is thus represented by characteristic $h$ and noise $n$. Characteristic $h$ and noise $n$ when jointly considered fully describe the effects of the channel on transmitted symbols. The received samples ($y_i$) are used to derive the reliability information. Channel State Information (CSI) is the total effect of the channel characteristic ($h$) (i.e., multiplicative distortion) on transmitted symbol. The CSI is equivalent to the impulse response (i.e., a function well known in electrical engineering that is used to fully describe a circuit) of the channel.

The reliability information can be derived with the use of the well known Maximum A posteriori Probability (MAP) criteria. The MAP criteria is usually implemented in the form of an algorithm. The MAP algorithm selects a codeword given a sequence of samples $y_i$ which have propagated through a channel having a certain characteristic represented by $h$; that is, the algorithm selects the codeword that maximizes the probability that the transmitted sequence was $c_i$ given that the input sequence to the receiver is $y_i$. MAP decoding of convolutional codes is described, for example, in L.R. Bahl, J. Cocke, F. Jelinek, J. Raviv, "*Optimal decoding of linear codes for minimizing symbol error rate*," IEEE Trans. Info. Theory, March 1974. The probability being maximized is a conditional probability written as:

$$P(\underline{c}|\underline{y}, \underline{h}) \tag{1}$$

Equation (1) and all other equations appearing in this application follow the convention in which double underlined variables represent matrices and single underlined variables represent vectors. The sequence of signals received by the receiver after such signals have propagated through a channel with characteristic $h$ and noise $n$ is usually given as:

$$\underline{y} = \underline{\underline{h}}\underline{x} + \underline{n} \tag{2}$$

Thus, for a receiver having $N_a$ antennae coupled to channel 108 with each antenna being sampled at $N_k$ ($N_k$ is an integer equal to or greater than 1) distinct points in time at rate 1/T, equation (2) can be written in the following form:

$$(3) \quad \begin{bmatrix} y_{0,0} & \cdots & y_{0,N_k-1} \\ \cdots & \cdots & \cdots \\ y_{N_a-1,0} & \cdots & y_{N_a-1,N_k-1} \end{bmatrix} = \begin{bmatrix} h_{0,0} & \cdots & h_{0,N_k-1} \\ \cdots & \cdots & \cdots \\ h_{N_a-1,0} & \cdots & h_{N_a-1,N_k-1} \end{bmatrix}\begin{bmatrix} x_0 & \cdots & 0 \\ \cdots & \cdots & \cdots \\ 0 & \cdots & x_{N_k-1} \end{bmatrix} + \underline{\underline{n}}$$

The characteristic, $h$ of channel 108 can be measured and then stored in matrix form as shown in equation (3). The symbols ($x_i$) are represented by diagonal matrix $\underline{x}$ where each diagonal element is a particular symbol generated by modulator 106. The elements of the diagonal matrix $\underline{x}$, matrix $\underline{h}$ and matrix $\underline{n}$ are complex numbers. The complex conjugate of $\underline{h}$, $\underline{x}$ and $\underline{n}$ is denoted with the use of an asterisks, i.e., $\underline{h}*$, $\underline{x}*$, $\underline{n}*$.

In essence, modulator 106 maps the $d_i$ bits into symbols. The particular mapping (e.g., Gray mapping) used generates a finite number of distinct symbols. All of the different symbols that can be generated by modulator 106 are stored in diagonal matrix $\underline{\underline{x}}$. As shown by equation (3), the transmitted symbols $x_i$ are multiplied by $\underline{\underline{h}}$ and then the noise is added. Equation (3) represents a communication system (e.g., mobile or wireless communication system) wherein a transmitted sequence of symbol propagates through a radio channel characterized by matrix $\underline{h}$ and captured by an antenna array with $N_a$ elements. In radio mobile communications systems (i.e., wireless communication systems), the distortion is manifested by rapid variations in amplitude and phase commonly referred to as fading.

Many communication systems such as Time Division Multiple Access (TDMA) wireless communication systems use a differential modulation scheme to transmit the symbols $x_i$ over channel 108. One example of a differential modulation scheme is the aforementioned M-DPSK technique.

## M-DPSK Modulation

Referring again to FIG. 1, when modulator 106 is a differential modulator, it performs a process which is a transformation from the space of input bits $d_{k,i}$ to the space of output complex symbols $x_k$ ; this is represented mathematically as:

$$x_k = f(x_{k-1}, d_{k,0}, ...., d_{k,N-1}) = x_{k-1}\xi_k = e^{j\frac{2\pi}{M}\varphi_k} \tag{4}$$

where $\varphi_k$ is the phase at time $k$. It should be noted that the amplitude of $x_k$ is arbitrarily set to one.

$\xi_k$ is a phase transition at time instant $k$, and $x$ is a differentially encoded signal at time $k$. The phase transition is obtained by mapping the N original bits into M-PSK constellation point. Mapping is shown, for example in FIG. 2A for M=2,4,8. Differential modulation is performed by grouping a block of N= log M  bits into a complex symbol and then multiplying this symbol by a previous differentially encoded symbol. In terms of a phase of a symbol, the M-DPSK modulator is considered a transformation (with memory) from the space of information bits d to the space of complex symbols $x$:

$$\varphi_k = f(\varphi_{k-1}, d_{k,0.....}, d_{k,N-1}) = f(\varphi_{k-1}, \delta_k) = \varphi_{k-1} + \delta_k \tag{5}$$

where $\varphi_k$ represents the phase of a symbol at time $k$ (i.e., a phase index, an integer number) and $\delta_k$ represents the change in phase between time $k$ and time $k$-1(i.e., a transition phase index):

$$\begin{aligned}\delta_k &= \varphi_k - \varphi_{k-1} \text{ for } \varphi_k \geq \varphi_{k-1} \\ &= M + \varphi_k - \varphi_{k-1} \text{ for } \varphi_k < \varphi_{k-1}\end{aligned} \tag{6}$$

The transmitted complex symbol is given by

$$x_k = e^{j\frac{2\pi}{M}\varphi_k}.$$

A graph known as a trellis is used to represent the time evolution of an M-DPSK sequence of symbols. The graph has M states (i.e., phases) with branches from the states representing the transition from any one of all of the states to any other state. A trellis for a 4-DPSK modulator is shown in FIG. 2. The trellis is alternatively described by a transition matrix $\underline{T}$. Each element T($i,j$) is a transition phase index giving the transition of a signal with phase $\varphi = i$ to a signal having phase $\varphi = j$ . The M-DPSK modulator maps (e.g., Gray mapping) incoming bits $d_{k,i}$ for $i$=0 ,........ ,($\log_2 M$-1)  to corresponding phase transition indices. For a particular input bit $d_{k,i} = b$ , there are

$$2^{(\log_2 M)-1}$$

possible transition phase indices. The set of transition phase indices can be represented with a matrix $\underline{\underline{G}}$(b). An element $G_b(i,j)$, where $i = 0, ..... , N-1$  and

$$j = 0, ...... , 2^{\log_2 M - 1} - 1$$

represent the $j$th transition phase index for bit $d_{k,i} = b$ .

A set $\underline{D}(d_{m,i})$ comprises sequences $x_k$ for $k$ =0,.......... ,$m$-2  and $k$ = m+1,........ $N_k$-1 , but with $x_{m-1}, x_m$ belonging to a set specified by $\underline{\underline{T}}$ and $\underline{\underline{G}}$ matrices. One example of M-DPSK modulation is $\pi/4$ DQPSK used in IS-136 TDMA wireless communication systems. IS- 136 is an established standard used for TDMA wireless communication systems in North America.

**Receiver**

Many communication systems use an M-DPSK modulation scheme with a receiver structure such as the one depicted in FIG. 1. The receiver comprises SOD 110 coupled to Deinterleaver 112 which is coupled to Soft Input Decoder 114. The soft outputs, i.e., the output of SOD 110, are de-interleaved by Deinterleaver 112 whose output is decoded by SID 114. The output signal of SID 114 ($b_i^{'}$) supposedly are the same as the information bits $b_i$ that were applied to Convolutional Encoder 102. Because of the distortions existing in channel 108 (and also in the transmitter and receiver circuitry), the bits decoded by SID 114 will not match exactly with the information bits $b$ that is, the decoded bit stream typically contains errors. A receiver (such as the one depicted in FIG. 1) uses an algorithm that attempts to minimize the occurrence of errors. The extent of the occurrence of errors is typically expressed in terms of an error rate; the error rate (i.e., the bit error rate or BER) is the ratio of the number of erroneous bits to the total number of bits. A block of bits is defined as Frame that contains a certain number of bits; the ratio of the number of erroneous frames (i.e., a frame with at least one erroneous bit) to the total number of Frames transmitted is the Frame Error Rate or FER. The rate at which data is transmitted in many digital communication systems--- particularly wireless communication systems (e.g., TDMA IS-136 systems) that use M-DPSK modulation---is ever increasing requiring relatively lower error rates. Typically M-DPSK signals are demodulated using differential detection, J. Proakis, _Digital Communications_, 3d edition, McGraw Hill, 1995. Differential detection is performed by multiplying the received sample at time $k$ by the complex conjugate of the previously received sample (i.e., $y_k{}^* y_{k-1} = z_k$). A final decision on the transmitted symbol is made by taking the constellation point that is the minimum distance from $z_k$. The use of differential detection to detect and decode differentially modulated signals is fast becoming inadequate for many communication systems which require relatively low error rates. What is therefore needed is a method and device that allows a receiver to detect and decode differentially modulated symbols with a relatively lower error rate than receivers that use differential detection.

**Summary of the Invention**

The present invention provides a device and method for a receiver that iteratively detects and decodes differentially modulated symbols at a relatively lower error rate. The method and device of the present invention calculates extrinsic and a priori information and uses such information to more accurately detect and decode information carried by the symbols. First, a block of samples representing at least one symbol is received. Reliability information (or soft outputs) is calculated from the received at least one block of samples and any available a priori information. Extrinsic information and updated a priori information are obtained from the calculated reliability information and such a priori information and extrinsic information are iteratively used to recalculate the reliability information. The iteratively calculated reliability information is ultimately used to decode information carried by the at least one block of samples.

**Brief Description of the Drawings**

FIG. 1 is a simplified block diagram of a communication system with a receiver having Soft Output Detector;
FIG. 2 is a trellis chart for a 4-DPSK modulation;
FIG. 3 is a simplified block diagram of a communication system with an iterative receiver of the present invention;
FIG. 4 is a more detailed diagram of the iterative receiver or iterative differential detector of the present invention;
FIG. 5 is flow chart showing the steps of the method of the present invention;
FIGS. 6-9 provide four possible implementations of the method of the present invention.

**Detailed Description**

The present invention provides a method and device for an iterative receiver which calculates iteratively reliability information from received symbols generated from a differential modulator such as an M-DPSK modulator where such iterative calculation is based on _a priori_ and extrinsic information. A differential modulator is a device whose output signal is based on the difference between a currently modulated signal and a previously modulated signal. The _a priori_ and extrinsic information are probability values (or L-values) used by the method and device of the present invention. An _a priori_ probability value is an arbitrarily defined value or a presumed value that is accepted as an established value; in short, it is a given value. The extrinsic information are _a posteriori_ probability values. A posteriori probability values are based on known or given probability values (e.g., _a priori_ probabilities) and calculated probability values. The iterative receiver of the present invention is configured as a Soft Input Soft Output (SISO) device; that is, it generates soft outputs and is able to receive soft inputs (i.e., probability values). The soft inputs and soft outputs are also called L-values.

The iterative receiver structure and method of the present invention is able to detect and decode information with a relatively lower error rate than other receiver structures. The design of the method and structure of the receiver of the present invention relies on the premise that the received signals, which are differentially modulated, are treated as a Markov chain. A Markov chain is a stochastic process (a collection of random variables) in which the conditional probability of a variable having a certain value (i.e., state of the variable) given the previous state of the variable is based solely on the previous state and not on any earlier state; such a stochastic process is also called a Markov process. A Markov differential modulator generates a sequence of symbols which can be modeled as a Markov process. Thus, an M-DPSK modulator generates a discrete-time Markov process with M states. A state at time $k$ is herein denoted as $S_k \in \{ 0, \ldots, M\text{-}1\}$. Referring back to equation (4) the M-DPSK Markov process is expressed in terms of transition probabilities as:

$$p_k(x_k | x_{k-1}) = P(S_k = x_k | S_{k-1} = x_{k-1}) = P(\xi_k \frac{x_k}{x_{k-1}} | S_{k-1} = x_{k-1}) \qquad (7)$$

Equation (7) is expressed in terms of phase indices as:

$$p_k(\varphi_k | \varphi_{k-1}) = P(\delta_k = \varphi_k - \varphi_{k-1} | S_{k-1} = \varphi_{k-1}) \text{ if } \varphi_k \geq \varphi_{k-1}$$
$$= P(\delta_k = M + \varphi_k - \varphi_{k-1} | S_{k-1} = \varphi_{k-1}) \text{ if } \varphi_k < \varphi_{k-1} \qquad (8)$$

For an M-DPSK Markov process, the output of the modulator coincides with the state of the variable. The transition probabilities are related to the *a priori* probabilities of the information bits which are assumed to be statistically independent of each other. The transition probabilities can thus be written as:

$$p_k(x_k | x_{k-1}) = P(S_k = x_k | S_{k-1} = x_{k-1}) = P(d_{k,0,\ldots,}d_{k,N-1}) = \prod_{i=0}^{N-1} P(d_{k,i}) \qquad (9)$$

An M-DPSK Markov modulator can be represented with a trellis chart having M states (see FIG. 2A where M = 4). Each branch, from state $S_{k-1}$ to state $S_k$, can be labeled with either the phase transition $\xi_k$ or the phase transition index $\delta_k$ or the coded bits $d_{k,i}$. The transition probabilities, equation (7) or (8), or the product of the *a priori* probabilities, equation (9), are associated with each branch.

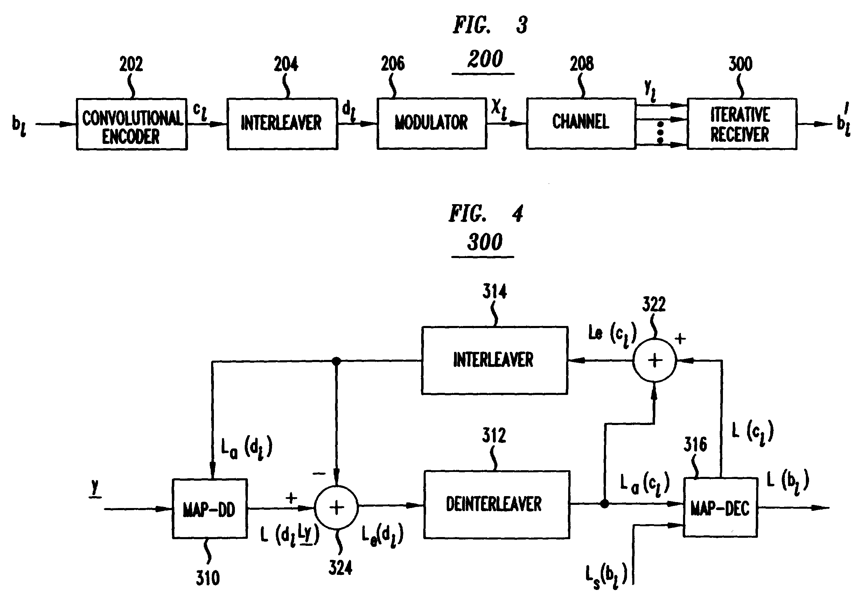

Referring now to FIG. 3, there is shown a model of a communication system 200 in which iterative receiver 300 of the present invention Is used to receive samples $y_i$ that are the symbols $x_i$ generated by modulator 206 in conformance with a Markov process and propagated through channel 208; consequently, the symbols $x_i$ represent a Markov chain. Communication system 200 has a transmitter portion comprising convolutional encoder 202, Interleaver 204 and modulator 206. It will be readily understood that only one transmitter and one receiver is shown only for ease of illustration; communication system 200, in its most general form, comprises a plurality of transmitters and receivers and can use Markov differential modulators other than M-DPSK modulators.

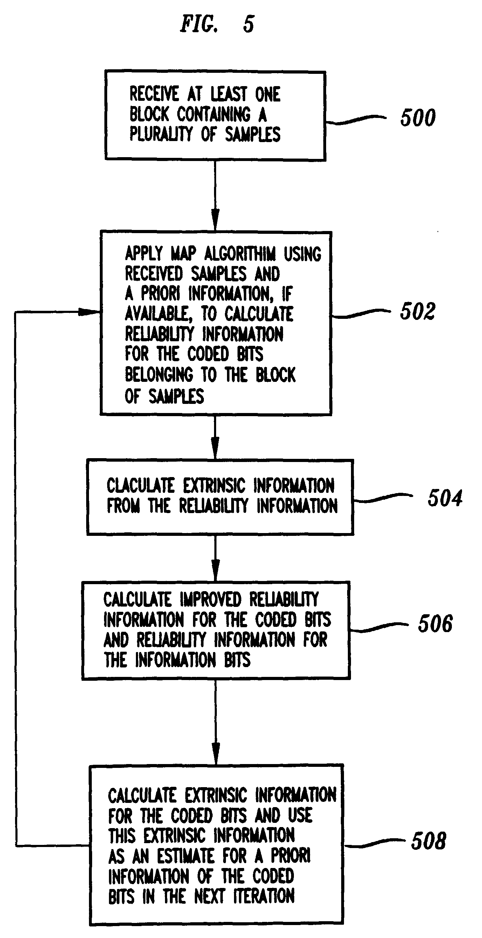

Referring now to FIG. 4, there is shown a more detailed representation of the method and device of the present invention. Iterative receiver 300 comprises a MAP Differential Detector (MAP-DD) 310 coupled to a MAP Decoder 316 (MAP-DEC) via an Interleaver 314 and a Deinterleaver 312. Deinterleaver 312 and Interleaver 314 each has an input and an output. MAP-DD 310 and MAP-DEC 316 are defined as *a posteriori* probability calculators; that is they calculate soft outputs given a sequence of soft inputs. As with the soft outputs, the soft inputs are probability values. Soft outputs $L_a(d_i)$ and $L_a(c_i)$ are outputs of Interleaver 314 and Deinterleaver 312 respectively; these soft outputs are defined as

$$L_a(d_i) = Int\{ L_e(c_i) \} \text{ where } Int \text{ represents the interleaving operation.} \qquad (10)$$

$$L_a(c_i) = Deint\{ L_e(d_i) \} \text{ where } Deint \text{ represents the deinterleaving operation.} \qquad (11)$$

$L_a(d_i)$ and $L_a(c_i)$ are obtained based on soft values and extrinsic information from a previous iteration of the receiver. MAP-DD.310 calculates a soft output, $L(d_i | \underline{y}, \underline{h})$, with the application of the well known MAP algorithm. The task of MAP-DD 310 is to estimate the *a posteriori* probabilities of the coded bits of a Markov differential modulator given the sequence of observations $\underline{y}$ and the channel state information $\underline{h}$ exploiting the intrinsic memory of an M-DPSK and a priori information on the coded bits such as $L_a$ ($d_i$) shown in FIG. 3. In particular, MAP-DD 310 determines a log-likelihood function of the coded bits given the sequence of channel observations:

$$(12) \quad L(d_{k,i}) = \ln \frac{P(d_{k,i} = +1|\underline{y},\underline{h})}{P(d_{k,i} = -1|\underline{y},\underline{h})} = \ln \frac{\sum\limits_{(S_k,S_{k-1}) \in D_i(+1)} p(S_k, S_{k-1}, \underline{y}, \underline{h})}{\sum\limits_{(S_k,S_{k-1}) \in D_i(-1)} p(S_k, S_{k-1}, \underline{y}, \underline{h})}$$

where $(S_k, S_{k-1}) \in D$, $(b)$ is the set of all possible transitions labeled with bit $d_{k,i} = b$. The set $D_i$ $(b)$ is constructed from a particular mapping employed by the modulator.

Similarly, MAP-DEC 316 calculates a soft output $L(c_i)$ by also applying the well known symbol by symbol MAP algorithm an example of which is described in C. Berrou, A. Glavieux, P. Thitimajshima, "*Near Shannon Limit error correcting coding and decoding turbo codes*" ICC 1993, pp. 1064-1070. The method and device of the iterative receiver of the present invention uses the soft outputs combined algebraically with the *a priori* information to derive extrinsic information that is used to as part of a feedback system to detect and decode the received samples ($y_i$) at a relatively lower error rate than conventional receivers (e.g., differential detectors). The algebraic combination is done with devices 322 and 324 which can be any summing or combination devices implemented as hardware, firmware, software or any combination thereof. Extrinsic information $L_e$ ($d_i$) and $L_e$ ($c_i$) are defined as follows

$$L_e(d_i) = L(d_i|\underline{y},\underline{h}) - L_a(d_i) \qquad (13)$$

$$L_e(c_i) = L(c_i) - L_a(c_i) \qquad (14)$$

Thus, the first extrinsic information (equation 13) is an algebraic combination of the soft outputs of MAP-DD 310 and Interleaver 314 and the second extrinsic information is an algebraic combination of the soft outputs of MAP-DEC 316 and Deinterleaver 312. $L_s$ ($b_i$) represents *a priori* information on the source bits $b_i$; such information may, for example, be estimates of the values of the source bits based on the statistical nature of various types of signals (e.g., voice, video, data) such source bits represent.

Referring to FIG. 5, the steps of the method of the present invention are shown. In step 500 at least one block of $N_k$ samples is received where $N_k$ is the number of samples as per equation (3). In step 502, MAP-DD 310 applies the MAP algorithm to the received at least one block of samples and a priori information, $L_a$ ($d_i$) (if available), for the coded bits that belong to the same block to obtain $L(d_i | y)$, its soft output (i.e., reliability information). It should be noted that in the first iteration, there is no *a priori* information available and thus all coded bits are assumed to be independent and equally distributed. Otherwise $L_a$ ($d_i$) is provided to MAP-310 as per equation (10). In step 504, extrinsic information $L_e$ ($d_i$) is calculated as per equation (13); that is, $L(d_i|y)$ is algebraically combined with $L_a$ ($d_i$). In step 506 $L_a$ ($c_i$) is obtained and fed to Interleaver 314 and MAP-DEC 316. MAP-DEC 316 applies the MAP algorithm using as input a block of $L_a$ ($c_i$) and if available, *a priori* information on the source bits $L_s$ ($b_i$) to obtain soft output $L(c_i)$ for the coded bits and $L(b_i)$ for the information bits. $L(b_i)$ is applied to a decision circuit (not shown) to obtain information bits. The information bits are the bits that were originally encoded by the convolutional encoder. The bit error rate or FER for the decoded bits are measured in any well known fashion. In step 508 $L(c_i)$ is algebraically combined with $L_a$ ($c_i$) as per equation (14) to obtain extrinsic information $L_e$ ($c_i$) which is applied to Interleaver 314 thus providing an estimated of *a priori* information to MAP-DD 310. Performance is improved (i.e., BER or FER decreases) as more iterations are performed. Iteration is stopped when the measured BER or FER no longer decreases; other criteria can be used to determine when to stop the iteration process.

## TDMA Wireless Communication Systems

The method and device of the iterative receiver of the present invention can be implemented within the context a TDMA wireless communication system. In particular, an IS-136 compliant TDMA system is used to demonstrate this particular application. As is well known, in an IS-136 TDMA system a frame having a length 40 milliseconds (msec.) is divided into six (6) equal slots. The frame defines a time period within which users of the system are allowed to transmit and receive information. For one particular mode of operation, each user is allocated 2 slots per frame. For example user 1 is allocated slots 1 and 3. Each user transmits a certain number of bits during the user's assigned slot period. The transmitted bits are interleaved over time; that is a portion of the bits transmitted by a user during one slot of a frame is actually transmitted by the TDMA system during the corresponding slot of the next frame. When the iterative receiver of the present invention is applied in a TDMA system which uses time interleaving, extra delay occurs because of the information feedback process and also because of the possible occurrence of multiple iterations.

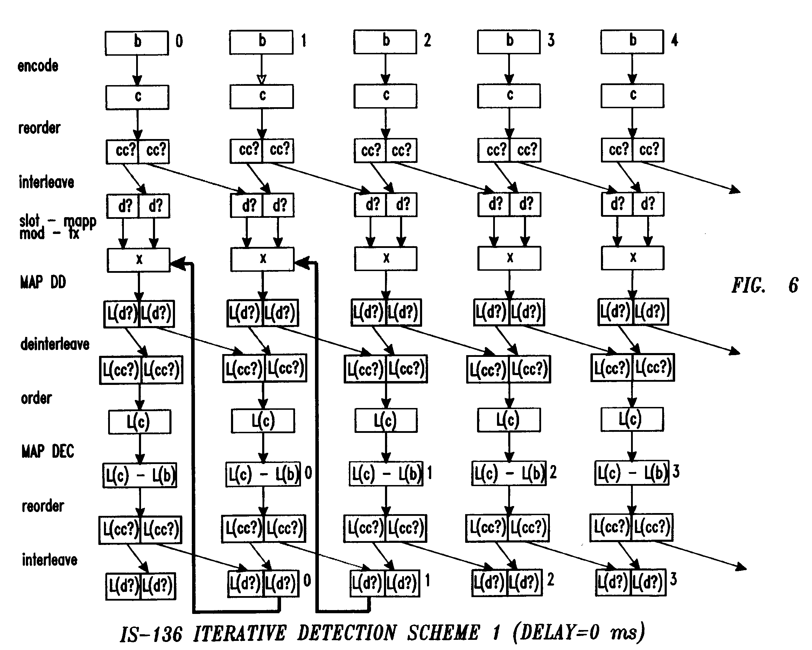

FIGS. 6-9 provide four possible implementations of the method of the present invention in a TDMA (IS-136) context. There are four columns in each of the FIGS. 6-9 where each column represents the various steps performed in a 20 msec. interval. Referring now FIG. 6, the information bits, b, are provided. In the next step, the information bits are encoded. The encoded information bits are then re-ordered; that is the original ordering of the bits is altered. The re-ordered encoded bits are interleaved over time; that is a portion (cc') of the reordered encoded bits from the current 20 msec. time interval is interleaved with a portion of reordered encoded bits from the previous 20 msec. time interval (not shown). The remaining portion (cc") of the reordered encoded bits from the current 20 msec. time interval is interleaved with reordered encoded bits of the following 20 msec. time interval. The interleaved bits are modulated and transmitted.

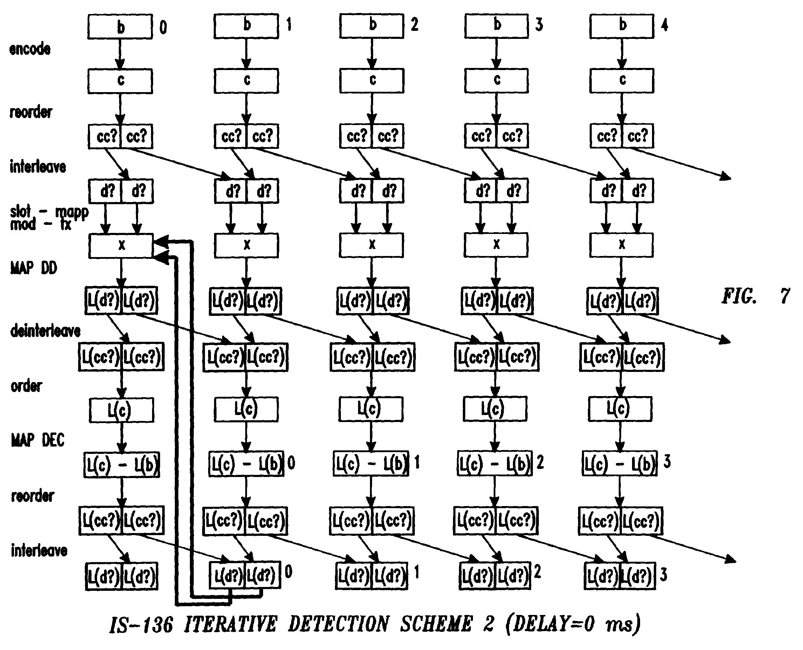

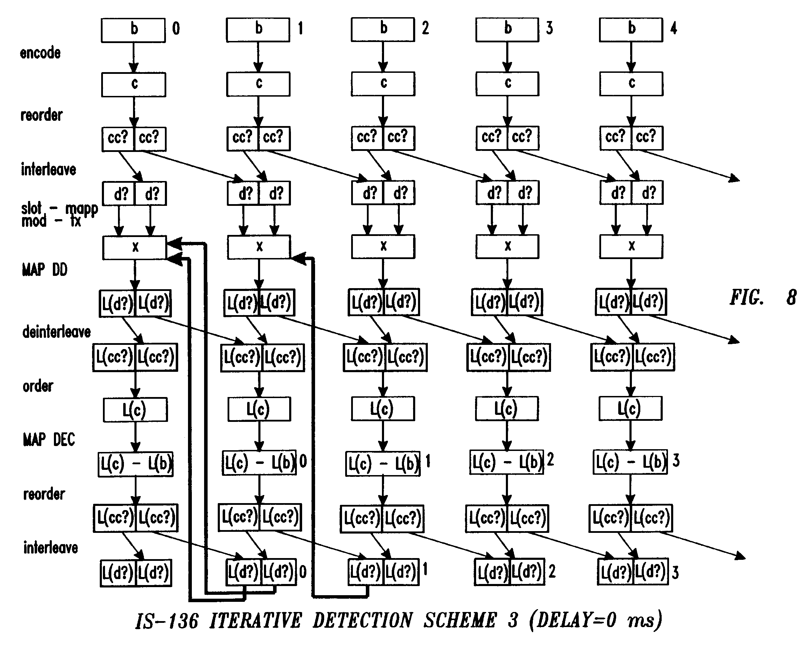

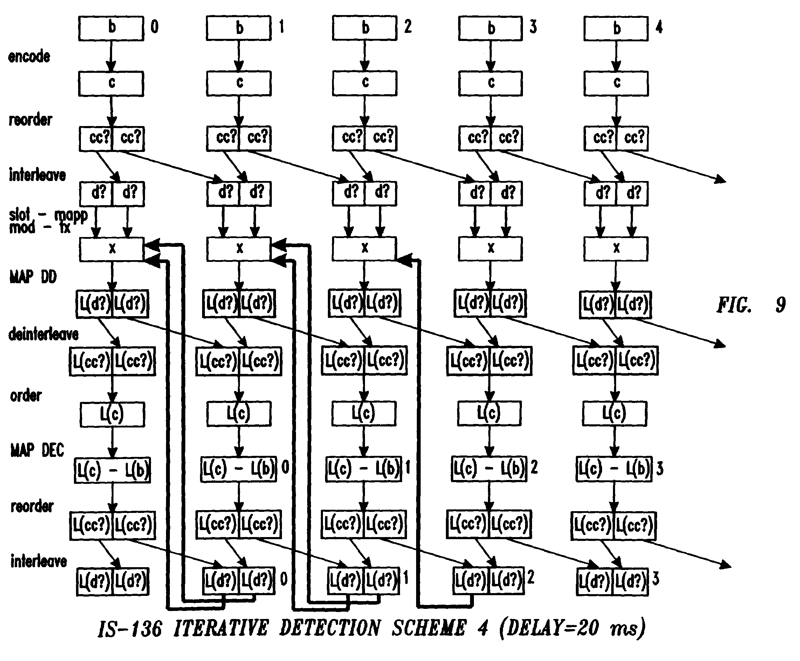

The following steps represent the operation of an iterative receiver operating and configured in accordance with the method and device of the present invention when set in the context of an IS-136 TDMA system. The transmitted symbols are detected by a MAP-DD device. After MAP differential detection, the L-values for the coded bits are obtained. The coded bits are then deinterleaved and reordered to produce input L-values to the MAP channel decoder. At the output of the decoder, after reordering and interleaving, input L-values (a priori information) are obtained to be used in another MAP differential detection step. In FIG. 6, for example, MAP-DD operation in slot 0 and slot 1 is done to collect L-values for the coded bits at slot 0. In FIG. 7, in the first iteration, MAP-DD operation is performed during slot 0 and slot 1 to collect L-values for the coded bits at time 0; these L-values are used iteratively in the MAP-DEC at slot 0 and at slot 1. In FIG. 8, for each iteration, MAP-DD as well as MAP-DEC are performed during slot 0 and slot 1. In FIG. 9 MAP-DD is performed during slot 0, slot 1 and slot 2. L-values for the coded bits of slot - 1 (not shown), slot 0 and slot 1 are thus collected. MAP-DEC for slot 0, slot 1 and slot 2 is then performed.

**Claims**

1. A method for detecting and decoding differentially modulated symbols, the method comprises the steps of:

receiving at least one block of samples;
CHARACTERIZED BY THE STEPS OF
calculating reliability information for the bits belonging to the at least one block of samples;
providing a priori information for the bits belonging to the at least one block of samples and calculating extrinsic information from the bits belonging to the at least one block of samples; and
using the a priori information to recalculate reliability information for the bits belonging to the received at least one block of samples.

*FIG. 1*

100

b_l → | CONVOLUTIONAL ENCODER | —c_l→ | INTERLEAVER | —d_l→ | MODULATOR | —χ_l→ ( CHANNEL ) —y_l→ | SOD | —Ω'_l→ | DEINTERLEAVER | —Ω_l→ | SID | → b'_l

102    104    106    108    110    112    114

*FIG. 2*

0
1
2
3

0
1
2
3

P(3.0)
P(2.0)
P(1.0)
P(0.0)

P(3.1)
P(2.1)
P(1.1)
P(0.1)

P(3.2)
P(2.2)
P(1.2)
P(0.2)

P(3.3)
P(2.3)
P(1.3)
P(0.3)

*FIG. 2A*

2 – PSK

4 – PSK

8 – PSK

EP 1 039 706 A1

## FIG. 3

### 200

$b_l$ → | CONVOLUTIONAL ENCODER | 202 → $c_l$ | INTERLEAVER | 204 → $d_l$ | MODULATOR | 206 → $X_l$ | CHANNEL | 208 → $Y_l$ | ITERATIVE RECEIVER | 300 → $b_l'$

## FIG. 4

### 300

## FIG. 5

RECEIVE AT LEAST ONE BLOCK CONTAINING A PLURALITY OF SAMPLES — 500

APPLY MAP ALGORITHIM USING RECEIVED SAMPLES AND A PRIORI INFORMATION, IF AVAILABLE, TO CALCULATE RELIABILITY INFORMATION FOR THE CODED BITS BELONGING TO THE BLOCK OF SAMPLES — 502

CLACULATE EXTRINSIC INFORMATION FROM THE RELIABILITY INFORMATION — 504

CALCULATE IMPROVED RELIABILITY INFORMATION FOR THE CODED BITS AND RELIABILITY INFORMATION FOR THE INFORMATION BITS — 506

CALCULATE EXTRINSIC INFORMATION FOR THE CODED BITS AND USE THIS EXTRINSIC INFORMATION AS AN ESTIMATE FOR A PRIORI INFORMATION OF THE CODED BITS IN THE NEXT ITERATION — 508

*IS-136 ITERATIVE DETECTION SCHEME 1 (DELAY=0 ms)*

*FIG. 6*

EP 1 039 706 A1

encode

| b | 0 | | b | 1 | | b | 2 | | b | 3 | | b | 4 |

c     c     c     c     c

reorder

cc? cc?    cc? cc?    cc? cc?    cc? cc?    cc? cc?

interleave

d? d?    d? d?    d? d?    d? d?    d? d?

slot – mapp
mod – tx

x     x     x     x     x

MAP DD

L(d?) L(d?)   L(d?) L(d?)   L(d?) L(d?)   L(d?) L(d?)   L(d?) L(d?)

deinterleave

L(cc?) L(cc?)   L(cc?) L(cc?)   L(cc?) L(cc?)   L(cc?) L(cc?)   L(cc?) L(cc?)

order

L(c)    L(c)    L(c)    L(c)    L(c)

MAP DEC

L(c) – L(b)   L(c) – L(b) 0   L(c) – L(b) 1   L(c) – L(b) 2   L(c) – L(b) 3

reorder

L(cc?) L(cc?)   L(cc?) L(cc?)   L(cc?) L(cc?)   L(cc?) L(cc?)   L(cc?) L(cc?)

interleave

L(d?) L(d?)   L(d?) L(d?) 0   L(d?) L(d?) 1   L(d?) L(d?) 2   L(d?) L(d?) 3

*FIG. 7*

*IS-136 ITERATIVE DETECTION SCHEME 2 (DELAY=0 ms)*

IS-136 ITERATIVE DETECTION SCHEME 3 (DELAY=0 ms)

FIG. 8

IS-136 ITERATIVE DETECTION SCHEME 4 (DELAY=20 ms)

FIG. 9

EP 1 039 706 A1

## PARTIAL EUROPEAN SEARCH REPORT

European Patent Office

which under Rule 45 of the European Patent Convention shall be considered, for the purposes of subsequent proceedings, as the European search report

Application Number
EP 00 30 1398

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HOEHER, LODGE: "Iterative decoding/demodulation of coded DPSK systems" IEEE GLOBAL TELECOMMUNICATIONS CONFERENCE, 8 - 12 November 1998, pages 598-603, XP002144108 Piscataway, US ISBN: 0-7803-4984-9 * figure 2 * | 1 | H04L27/22 H04L25/03 |
| X | HOEHER, LODGE: "Iterative differential PSK demodulation and channel decoding" 1998 IEEE INTERNATIONAL SYMPOSIUM ON INFORMATION THEORY , 16 - 21 August 1998, page 425 XP002144109 New York, US ISBN: 0-7803-5000-6 * figure 1 * | 1 | |
| | -/-- | | |

TECHNICAL FIELDS SEARCHED (Int.Cl.7)

H04L

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 2 August 2000 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

16

# PARTIAL EUROPEAN SEARCH REPORT

Application Number

EP 00 30 1398

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| X,P | HOEHER, LODGE: "'Turbo DPSK': iterative differential PSK demodulation and channel decoding" IEEE TRANSACTIONS ON COMMUNICATIONS, vol. 47, no. 6, June 1999 (1999-06), pages 837-843, XP000835262 NEW YORK, US ISSN: 0090-6778 * figure 3 * | 1 | |
| X,P | MAY, ROHLING: "Turbo decoding of convolutional codes in differentially modulated OFDM transmission systems" 49TH IEEE VEHICULAR TECHNOLOGY CONFERENCE , 16 - 20 May 1999, pages 1891-1895 vol.3, XP002144110 Piscataway, US ISBN: 0-7803-5565-2 * figure 4 * | 1 | TECHNICAL FIELDS SEARCHED (Int.Cl.7) |
| X,P | GUAN-FENG QIN ET AL.: "Iterative decoding of coded GMSK system with differential detection" FIFTH ASIA-PACIFIC CONFERENCE ON COMMUNICATIONS AND FOURTH OPTOELECTRONICS AND COMMUNICATIONS CONFERENCE , 18 - 22 October 1999, pages 697-700, XP002144111 Beijing, CN * figure 2 * | 1 | |

European Patent
Office

**INCOMPLETE SEARCH
SHEET C**

Application Number

EP 00 30 1398

Claim(s) searched incompletely:
        1

Reason for the limitation of the search:

Present claim 1 relates to an extremely large number of possible methods. In particular, the terms "reliability information" and "a priori information" have a large number of possible interpretations in this field. Support within the meaning of Article 84 EPC and disclosure within the meaning of Article 83 EPC is to be found, however, for only a portion of the methods claimed. In the present case, the claims so lack support, and the application so lacks disclosure, that a meaningful search over the whole of the claimed scope is impossible. Consequently, the search has been carried out for those aspects of the claim, which are supported and disclosed, namely the method described from line 26 of page 11 to line 14 of page 13 of the description.